(19) **Europäisches Patentamt**

**European Patent Office**

**Office européen des brevets**

(11) Publication number: **0 585 710 A2**

(12) **EUROPEAN PATENT APPLICATION**

(21) Application number: **93113099.1**

(22) Date of filing: **16.08.93**

(51) Int. Cl.5: **G11B 7/24**

(30) Priority: **19.08.92 JP 220372/92**
**19.03.93 JP 59987/93**

(43) Date of publication of application:
**09.03.94 Bulletin 94/10**

(84) Designated Contracting States:
**DE FR GB IT LU NL**

(71) Applicant: **DIAFOIL HOECHST CO., LTD**
**28-10, Hongo 1-chome**
**Bunkyo-ku Tokyo(JP)**

(72) Inventor: **Ozaki, Yoshihide**
**2-10-3-14-401, Ogawa**
**Machida-shi, Tokyo(JP)**
Inventor: **Komatsu, Jiro**
**375, Kawasaki-cho**
**Nagahama-shi, Shiga-ken(JP)**

(74) Representative: **TER MEER - MÜLLER -**
**STEINMEISTER & PARTNER**
**Mauerkircherstrasse 45**
**D-81679 München (DE)**

(54) **Multilayered polyester base film for optical tape.**

(57) Disclosed herein is a multilayered polyester base film for optical tapes, comprising a polyester film and an active energy ray-curing layer formed on one side of said polyester film, a surface hardness of the active energy ray-curing layer being not less than H, a center line average roughness ($Ra^A$) of the surface (A surface) of the active energy ray-curing layer being not more than 0.005 μm, a center line average roughness ($Ra^B$) of the exposed surface (B surface) opposite of the polyester film from the active energy ray-curing layer being 0.005 to 0.3 μm, and a light transmittance of said multilayered base film being 30%.

Rank Xerox (UK) Business Services
(3.10/3.09/3.3.4)

## BACKGROUND OF THE INVENTION

The present invention relates to a multilayered polyester film used as a base film of an optical tape which is capable of recording and reproducing information by irradiation of light.

With a recent trend toward higher density of information recording and digital representation of recorded information, various information recording and reproducing systems have been developed. Of these systems, the one making use of optical recording and reproducing techniques is considered most influential. The optical tapes using various types of base films, for example, optical tapes obtained by forming a Te-As-Se metal film on a plastic base film, have been reported for use in the optical recording and reproducing system. However, the base films used have both merits and demerits, and there has been available no base film well satisfactory for practical use.

For example, an optical tape produced by using a conventional flat biaxially oriented polyester film as a base film had the problems that it was poor in film slipperiness, bad in workability and susceptible to damage such as scratches in the production process, and as a result there is given adverse effect to the optical recording performance of the produced optical tape.

In recording information on an optical tape, the recording layer of the optical tape is thermally disrupted by laser light irradiated from the optical head to form the recording pits. Thus, the information data supplied to the optical head are recorded as pits on the optical tape. For reproducing the recorded information, laser light of a lower level (which the level does not disrupt the recording layer) than that at the time of recording is irradiated along the recording track, and the pit information is read from the difference between the irradiated laser light level and the reflected light level thereof. Therefore, for detecting the difference between the irradiated laser light level and the reflected light level at the time of reproduction, it is essential that the base film of the optical tape has high light transmittance or high light absorptivity.

With the object of realizing smooth run of optical tape, JP-A-4-163737 proposes an optical tape capable of optically recording and reproducing information, comprising a base film and a recording layer formed on the base film by means of an intermediate layer, wherein the center line average roughness of the recording layer-forming surface of the intermediate layer is riot more than 50 Å, and the center line average roughness of the opposite surface of the base film from the intermediate layer is 50 to 1,000 Å. As the materials usable for the intermediate layer, ultraviolet curing resins and heat curing resins such as epoxy resin, acrylic resin, acrylic epoxy resin, melamine resin, phenol resin and urethane resin are described in JP-A-4-163737.

In JP-A-4-163737, the intermediate layer is formed for the purpose of allowing smooth run of the optical tape and consequently providing an enhanced recording and reproducing performance. This JP-A-4-163737 is silent on the measures for preventing occurrence of scratches on the optical tape. It is not intended to improve the light transmitting or light absorbing properties of the base film for obtaining the better recording and reproducing performance of the tape, nor is given any statement allusive to the motivation of improvement of the said properties.

The conventional base films of optical tapes were unsatisfactory in laser light transmitting and absorbing property. The laser light irradiated to the recording pits is partly reflected at the surface of the base film or at the rear side thereof, and detected as the reflected light, resulting in a reduced S/N ratio in the regenerated signal.

For prevention of reflection of laser light at the rear side of the base film, JP-A-1-286130 proposes an optical tape in which a light-sensitive recording layer is formed on one side of the base layer, while a light reflection preventive layer is formed on the other side of the said base layer.

In JP-A-1-286130, a light reflection preventive layer is formed for improving the signal recording and reproducing performance, lowering coefficient of friction in its sliding motion relative to the tape holder and enhancing durability of the optical tape. In this JP-A-1-286130, however, there is no description on the measures for preventing occurrence of defects such as scratches on the recording layer-forming surface of the base film. It is not intended to improve scratches resistance of the recording layer-forming surface of the base film for obtaining the better recording and reproducing performance, nor is given any statement allusive to the motivation of improvement of the scratches resistance.

Thus, there has been a strong demand in the art for the development of a base film for optical tapes which can satisfy both requirements for excellent laser light transmitting and absorbing property, and excellent scratches resistance of the recording layer-forming surface of the base film, and which also has the better recording and reproducing performance than the conventional optical tape.

As a result of the present inventors' earnest studies for providing a base film for optical tapes which satisfies the above requirements, it has been found that a multilayered film obtained by forming on one side of a polyester film an active energy ray-curing layer having a surface hardness of not less than H, in which

2

a light transmittance of the multilayered film is adjusted to be not more than 30%, has excellent and favorable properties for use as a base film for an optical tape. The present invention has been attained on the basis of this finding.

## SUMMARY OF THE INVENTION

An object of the present invention is to provide a multilayered polyester base film which is suited for use as a base film for optical tapes, the polyester base film having the flat and smooth surface free of scuffs or scratches, and also having the excellent light absorbing properties and a light transmittance of not more than 30 %.

Another object of the present invention is to provide a multilayered polyester base film for an optical tape in which a recording layer is formed thereon and which has the excellent recording and reproducing characteristics such as a high C/N ratio.

In a first aspect of the present invention, there is provided a multilayered polyester base film for optical tapes, comprising a polyester film and an active energy ray-curing layer formed on one side of the said polyester film, the said active energy ray-curing layer having a surface hardness of not less than H, the center line average roughness (Ra$^A$) of the surface (A surface) of the active energy ray-curing layer of the said multilayered base film being not more than 0.005 $\mu$m, the center line average roughness (Ra$^B$) of the exposed surface (B surface) of the multilayered base film being 0.005 to 0.3 $\mu$m and the light transmittance of the said multilayered base film being not more than 30 %.

In a second aspect of the present invention, there is provided a multilayered polyester base film for optical tapes, comprising a polyester film and an active energy ray-curing layer formed on one side of the said polyester film, the said active energy ray-curing layer having a surface hardness of not less than H, the center line average roughness (Ra$^A$) of the surface (A surface) of the active energy ray-curing layer of the said multilayered base film being not more than 0.005 $\mu$m, the center line average roughness (Ra$^B$) of the exposed surface (B surface) of the multilayered base film being 0.005 to 0.3 $\mu$m, the light transmittance of the said multilayered base film being not more than 30 %, and the polyester film containing a light absorptive material.

In a third aspect of the present invention, there is provided a multilayered polyester base film for optical tapes, comprising a polyester film and an active energy ray-curing layer formed on one side of the said polyester film, the said active energy ray-curing layer having a surface hardness of not less than H, the center line average roughness (Ra$^A$) of the surface (A surface) of the active energy ray-curing layer of the said multilayered base film being not more than 0.005 $\mu$m, the center line average roughness (Ra$^B$) of the exposed surface (B surface) of the multilayered base film being 0.005 to 0.3 $\mu$m, the light transmittance of the said multilayered base film being not more than 30 %, and the active energy ray-curing layer containing a light absorptive material.

In a fourth aspect of the present invention, there is provided a multilayered polyester base film for optical tapes, comprising a polyester film, an active energy ray-curing layer and a light absorption layer sandwiched between the polyester film and active energy ray-curing layer, the said active energy ray-curing layer having a surface hardness of not less than H, the center line average roughness (Ra$^A$) of the surface (A surface) of the active energy ray-curing layer of the said multilayered base film being not more than 0.005 $\mu$m, the center line average roughness (Ra$^B$) of the exposed surface (B surface) of the multilayered base film being 0.005 to 0.3 $\mu$m, and the light transmittance of the said multilayered base film being not more than 30 %.

## DETAILED DESCRIPTION OF THE INVENTION

The term "polyester" used in the present invention means polymers which can be obtained from polycondensation of aromatic dicarboxylic acids such as terephthalic acid, isophthalic acid, naphthalene-2,6-dicarboxylic acid, etc., or esters thereof, and glycols such as ethylene glycol, diethylene glycol, tetramethylene glycol, neopentyl glycol, etc.

These polyesters can be obtained in various methods such as a method of direct polycondensation of an aromatic dicarboxylic acid and a glycol; ester exchange reaction, of an aromatic dicarboxylic acid dialkyl ester and a glycol; and a method of polycondensation of diglycol esters of aromatic dicarboxylic acids. Polyethylene terephthalate and polyethylene-2,6-naphthalene dicarboxylate can be cited as typical examples of these polymers. These polymers include homopolymers and copolymerized polyesters in which not more than 15 mol % of the dicarboxylic acid moiety is constituted by a non-aromatic dicarboxylic acid and/or a diol.

3

It is also possible to use a polymer blend comprising one of said polyesters of not less than 50 wt% and other polymer(s). "Other polymers" usable here include polyamides, polyolefins and other types of polyesters (including polycarbonates).

The above polyesters may contain an additive or additives such as stabilizer, coloring agent, antioxidant, defoaming agent, etc.

The $F_5$ value in the machine (longitudinal) direction of the polyester film according to the present invention is not less than 8 kg/mm$^2$, preferably not less than 9 kg/mm$^2$, more preferably not less than 10 kg/mm$^2$. When the $F_5$ value in the machine direction of the polyester film is less than 8 kg/mm$^2$, the workability of the base film in the optical tape production process and the characteristics of the produced optical tape may become deteriorate.

The heat shrinkage of the polyester film in the machine (longitudinal) direction after heat-treating at a temperature of 100°C for 30 minutes is not more than 5%, preferably not more than 3%, more preferably not more than 2%. When this heat shrinkage exceeds 5%, the heat resistance of the polyester film tends to lower, causing adverse effect on the properties of the produced optical tape.

In the present invention, an active energy ray-curing layer is laminated for flattening and preventing damage such as scuffs and/or scratches to the surface of the polyester film on which the recording layer is formed.

As a component of the active energy ray-curing layer, there maybe used, for example, unsaturated polyester based compositions, acrylic resin based compositions, addition polymer based compositions, thiol/acrylic hybrid based compositions, cationic polymerization product based compositions, and cationic polymerization product/radical polymerization product hybrid based compositions. In view of curing property, flexibility, heat resistance and durability, the acrylic resin based compositions are preferred.

The acrylic resin based compositions usable for forming the active energy ray-curing layer in the present invention are composed of 10 to 90 wt% of an acrylic oligomer and 10 to 90 wt% of a reactive diluent as the active energy ray polymerization components and, if necessary, may contain other additive(s) such as not more than 10 wt% of a photopolymerization initiator, not more than 10 wt% of a photosensitizer, a suitable amount of a modifier.

As the acrylic oligomer, there can be used an oligomer in which a reactive acryloyl or methacryloyl group is bonded to an acrylic resin skeleton, as well as other oligomers such as polyester (meth)acrylate, epoxy (meth)acrylate, urethane (meth)acrylate, polyether (meth)acrylate, silicone (meth)acrylate, and polybutadiene (meth)acrylate. It is also possible to use the oligomers in which a reactive acryloyl or methacryloyl group is bonded to a rigid skeleton composed of an isocyanuric acid, cyclic phosphazene or the like.

The reactive diluent has a group reactable with the acrylic oligomer. It serves as a solvent in the coating step and constitutes a coat component. As the reactive diluents usable in the present invention, pentaerythritol tri(meth)acrylate, pentaerythritol tetra(meth)acrylate, dipentaerythritol tri(meth)acrylate, dipentaerythritol tetra(meth)acrylate, dipentaerythritol penta(meth)acrylate, dipentaerythritol hexa(meth)acrylate, trimethylolpropane tri(meth)acrylate, ethylene glycol di(meth)acrylate, propylene glycol di(meth)acrylate, (meth)-acryloyloxypropyltrimethoxysilane, and (meth)acryloyloxypropyltriethoxysilane may be exemplified.

As the photopolymerization initiator, 2,2-ethoxyacetophenone, 1-hydroxycyclohexyl phenyl ketone, dibenzoyl, benzoin, benzoin methyl ether, benzoin ethyl ether, benzoin isopropyl ether, p-chlorobenzophenone, p-methoxybenzophenone, Michler's ketone, acetophenone, 2-chlorothioxanthone, anthraquinone, phenyl disulfide and 2-methyl-[4-(methylthio)phenyl]-2-morpholino-1-propane may be exemplified. The polymerization initiator may be used either singly or in combination.

As the photosensitizer, tertiary amines such as triethylamine, triethanolamine and 2-dimethylaminoethanol; arylphosphines such as triphenylphosphine; and thioethers such as $\beta$-thioglycol may be exemplified. The photosensitizer can be used either singly or in combination.

The modifiers usable in the present invention include a coating property improver, a defoaming agent, a thickener, lubricant, an organic polymer, a stabilizer, a surfactant, etc. The modifiers may be properly blended as a component of the active energy ray-curing layer within limits not impairing the reaction caused by the active energy rays.

In the present invention, the said composition is coated on a polyester film by a suitable means and the active energy rays are irradiated thereto to cause crosslinking and curing. As the active energy rays usable for the said purpose, ultra violet rays, visible light rays, electron beams, $\alpha$-rays and $\beta$-rays can be used, but ultraviolet rays and electron beams are preferred. The active energy rays are usually applied from the curing layer side, but in order to enhance adhesion to the film, a reflector capable of reflecting the active energy rays may be provided on the exposed film side, or the active energy rays may be applied from the exposed film side.

4

The thickness of the active energy ray-curing layer is in the range of 0.1 to 20 $\mu$m, preferably 0.5 to 10 $\mu$m, more preferably 1 to 7 $\mu$m. When the thickness of the said layer is less than 0.1 $\mu$m, it may prove insufficient to effect desired flattening of the film surface. When the layer thickness exceeds 20 $\mu$m, there may take place excessive curing shrinkage of the layer, causing film curling toward the cured layer side.

The surface hardness of the active energy ray-curing layer needs to be not less than H, preferably not less than 2H for preventing scratches or other damage to the said layer.

In the present invention, in order to improve adhesion of the active energy ray-curing layer to the polyester film, the film surface may be subjected to an appropriate chemical treatment or discharge treatment. Preferably an adhesion layer is provided between the film and the active energy ray-curing layer. Further, if necessary, an intermediate layer such as an antistatic layer may be additionally provided.

A suitable method such as co-extrusion method or coating method may be employed for providing the said adhesion layer and other intermediate layer(s).

In the present invention, in order that a center line average roughness (Ra$^B$) of the exposed film-surface (B surface) of the polyester film is in the range of 0.005 to 0.3 $\mu$m, a thin film layer containing the fine particles may be laminated on the said B surface of the polyester film by a co-extrusion method. Alternatively, a coat may be formed on the B surface of the polyester film by applying a coating solution containing the fine particles and a binder resin on the said B surface in the course of or after the polyester film-forming operation.

As the fine particles usable for the said purpose, the inorganic particles such as the particles of silica, colloidal silica, titanium oxide, calcium carbonate, kaolin, aluminum oxide, etc.; organic particles such as the particles of crosslinked polystyrene, crosslinked acrylic resin , crosslinked melamine resin, epoxy resin, etc.; and carbon black may be exemplified. The average size (diameter) of these fine particles is preferably in the range of 0.01 to 3 $\mu$m, more preferably 0.05 to 1 $\mu$m. The content of these particles is usually selected from within the range of 0.1 to 10 wt% based on the particle-containing layer constituting the B surface of the polyester film. The shape of the particles may be spherical, elliptical or flat.

As other means for affording a desired running property to the B surface of the polyester film, there can be employed a method in which an anionic surfactant, a cationic surfactant, a fluorine surfactant or a lubricant such as a wax is contained in the coating solution, or a method in which a coating solution containing a compound having peculiarity in phase separation and stretching properties, for example, a water-soluble polymer such as cellulose, gelatin, polyacrylic acid, etc., as a protuberance forming agent is applied in the film forming process and the obtained film is stretched to form the protuberances on the film surface.

The light transmittance (T, measured at the wavelength of 830 nm) of the multilayered film according to the present invention is not more than 30%, preferably not more than 20%. The following means are available for providing a multilayered film with T in the above-defined range.

(1) A light absorptive material is contained in the polyester film.

(2) A layer containing a light absorptive material is provided between the polyester film and the active energy ray-curing layer.

(3) A light absorptive material is contained in the active energy ray-curing layer.

(4) A layer containing a light absorptive material is provided on the opposite side of the polyester film from the active energy ray-curing layer.

These means may be employed singly or in combination, but the means of (3) is especially preferred.

As the light absorptive materials usable in the present invention, carbon black, anthraquinone compounds, aminium compounds, polymethine compounds, diimonium compounds, cyanin compounds, squarilium compounds, naphthoquinone compounds, quinoneimine compounds, quinonediimine compounds, pyrylium compounds, triphenylmethane compounds, croconic methine compounds, tetrahydrocholine compounds, azulenium compounds, phthalocyanine compounds, and dithiol metal complex salt compounds may be exemplified. These compounds may be used singly or in combination. Among them, carbon black is preferred.

The kind of carbon black usable as light absorptive material in the present invention is not specified, but lamp black, thermal black, furnace black and acetylene black are preferred.

As for the particle size of carbon black, the average diameter of the primary particles is in the range of 10 to 50 nm, preferably 10 to 30 nm. When the average diameter of the primary particles exceeds 50 nm, the particles tend to form the excessively large agglomerates to create the coarse protuberances on the film surface. When the average diameter is less than 10nm, the surface energy increases to encourage formation of the excessively large particle agglomerates.

The content of the carbon black particles is 0.05 to 5 wt%, preferably 0.1 to 3 wt% for providing a satisfactory light absorptivity. When the content of the carbon black particles is less than 0.05 wt%, no appreciable improvement of light absorptivity of the film is attained, and when the content exceeds 5 wt%, the formation of the coarse protuberances on the film surface is generated.

The incorporation of the carbon black particles in the film can be effected by any pertinent method such as adding the particles to the film composition during or after the polymerization reaction or kneading the particles in the film composition in the course of drying or extruding. But it is preferred that a master batch containing carbon black in a high concentration is first prepared and it is blended with other component material polyesters before or after drying to obtain a film containing carbon black in a desired concentration.

It is recommendable to add a dispersant for facilitating dispersion of the carbon black particles in the film.

In the polyester film of the present invention, other organic and/or inorganic particles may be contained, if necessary.

The polyester film according to the present invention may be of a single-layer or multi-layer structure. It may be a two-layered or three-layered film comprising a layer containing a light absorptive material such as carbon black and a layer or layers containing no light absorptive material laminated on one or both sides thereof.

The light absorptivity of the carbon black-containing base film of the present invention is preferably not less than 70%, more preferably not less than 80%.

The intrinsic viscosity ($\eta$) of the film of the present invention is preferably in the range of 0.45 to 0.70 in view of the physical properties of the film.

In the following, a process for producing a carbon black-containing base film according to the present invention is described in detail. It should be understood, however, that the present invention is not limited to this process but can be otherwise embodied as far as the essential features of the invention are incorporated.

A material comprising basically a polyethylene terephthalate containing carbon black particles and if necessary, fine particles of other substance(s) such as kaolin, silica, etc., and a small amount of other polyester(s) as copolymerization or blend component, is dried and extruded into a sheet by an extruder at a temperature usually in the range of 260 to 320°C, and is cooled to a temperature not more than 80°C to form a substantially amorphous sheet. In this sheet forming step, it is recommended to employ an ordinary electrostatic charge cooling method. The sheet is stretched in the machine and transverse directions to obtain a biaxially oriented film, and if necessary, after re-stretching in the machine direction and/or transverse direction, the obtained film is heat-treated at a temperature within the range of 180 to 250°C. In the above process, the film may be relaxed 0.1 to 20% in the widthwise and machine (longitudinal) directions in the highest temperature zone of the heat treatment and/or the cooling zone at the outlet of the heating station. The heat treatment may be conducted in two stages.

In case of forming a base film having active energy ray-curing layer containing at least one light absorptive compound, as the light absorptive compound used, anthraquinone compounds, aminium compounds, polymethine compounds, diimonium compounds, cyanin compounds, squarilium compounds, naphthoquinone compounds, quinoneimine compounds, quinonediimine compounds, pyrylium compounds, triphenylmethane compounds, croconic methine compounds, tetrahydrocholine compounds, azulenium compounds, phthalocyanine compounds and dithiol metal complex salt compounds may be exemplified.

For incorporating the light absorptive material in the active energy ray-curing layer, the light absorptive material is added in an amount of usually 0.01 to 30 wt%, preferably 0.1 to 10 wt% in the composition of the active energy ray-curing layer, and the resultant composition is coated on a polyester film by a suitable means and exposed to the active energy rays to cause crosslinking and curing.

As the method of forming the light absorption layer, co-extrusion method and coating method can be used. For example, the coating composition composed of the light absorptive material and an ordinary binder resin is coated on the polyester film. In the light absorption layer, the content of the light absorptive material is 0.01 to 30 wt%, preferably 0.1 to 10 wt%.

The thickness of the polyester film in the present invention is to 4 to 299 $\mu$m, preferably 9 to 99 $\mu$m, and the thickness of the light absorption layer is 0.1 to 20 $\mu$m, preferably 0.5 to 10 $\mu$m.

The thickness of the multilayered base film according to the present invention is preferably 5 to 300 $\mu$m, more preferably 10 to 100 $\mu$m.

In the present invention, it is preferable that the surface of the polyester film on the side which is provided with a recording layer is as flat as possible. With laminating of an active energy ray-curing layer, the center line average roughness ($Ra^A$) of the surface (A surface) of the active energy ray-curing layer is not more than 0.005 $\mu$m, preferably not more than 0.003 $\mu$m, more preferably not more than 0.002 $\mu$m. When $Ra^A$ exceeds 0.005 $\mu$m, the optical recording properties of the optical tape are deteriorated.

6

In the present invention, the center line average roughness ($Ra^B$) of the opposite surface (B surface) of the multilayered base film from the recording layer-forming side is in the range of 0.005 to 0.3 $\mu$m, preferably 0.007 to 0.05 $\mu$m, more preferably 0.008 to 0.02 $\mu$m. When $Ra^B$ is less than 0.005 $\mu$m, the slipperiness of the film, its workability in the production of optical tape and the optical recording properties of the produced optical tape may be deteriorated. On the other hand, when $Ra^B$ exceeds 0.3 $\mu$m, the back-side transfer phenomenon in which the roughness of the B surface is transferred to the recording layer surface, becomes conspicuous, resulting in the deteriorated optical recording properties of the produced optical tape.

A recording layer is provided on the active energy ray-curing layer of the thus obtained multilayered polyester film to produce an optical tape.

The recording layer in the optical tape of the present invention is not specified, but the following may be cited as the examples of the materials usable for forming the recording layer: metals such as Te, Zn, In, Sn, Zr, Al, Ti, Cu, Au and Pt; half metals such as Bi, As and Sb; semiconductors such as Ge and Si; and combinations thereof.

It is also possible to use the compounds such as sulfides, oxides, borides, silicates, carbides and nitrides of the said metals, half metals and semiconductors, and mixtures of these compounds and metals.

The recording layer can be formed by suitable means such as deposition, sputtering, ion plating, etc. This recording layer may be of a single-layer or multi-layer structure.

The multilayered polyester film according to the present invention is capable of providing an optical tape with excellent optical recording characteristics, especially excellent reproducing performance, and its industrial value is high.

EXAMPLES

The present invention will hereinafter be described in more detail by showing the examples thereof, which examples, however, are merely intended to be illustrative and not to be construed as limiting the scope of the invention. The following methods were employed for the evaluations in the Examples. Also, in the following Examples and Comparative Examples, all "parts" are "part by weight", unless otherwise noted.

(1) Center Line Average Roughness (Ra)

The center line average roughness on the surface of the substrate was determined as follows by using a surface roughness apparatus (SE-3F) [manufactured by Kosaka Institute Co.]. That is, a portion of a sampling length L (2.5 mm) was sampled in the direction of the center line from a film cross sectional curve. A value given by the following formula is represented by "$\mu$m" when expressing the roughness curve: y = f(x), indicating the center line for the sampled portion on the x-axis and the direction of the longitudinal stretching on the y-axis. The center line average roughness (Ra) is represented by determining ten cross sectional curves from the surface of the specimen film and expressed by an average value for the center line roughness of the sampled portion determined from the cross sectional curves. Further, the tip radius of the stylus was 2 $\mu$m, the load was 30 mg and the cut-off value was 0.08 mm.

$$Ra = 1/L \int_0^L | f(x) | dx$$

(2) Tensile Test ($F_5$ value)

A sample of 50 mm in length and 15 mm in width was pulled at a rate of 50 mm/min in a room adjusted to a temperature of 23°C and a humidity of 50% RH by using a tensilon tester Intesco Model 2001 (manufactured by Intesco Co.), and the strength at 5% elongation was defined as $F_5$ value.

(3) Heat shrinkage

The sample film was subjected to heat-treatment in a tensionless state at a temperature of 100°C for 30 minutes by using a hot-air drying oven (manufactured by Tabai Seisakusgo Ltd.) and the dimensional change of the film in its longitudinal direction after the heat-treatment was measured and shown by percent (%).

## (4) Light transmittance

The light transmittance T (%) at a wavelength of 830 nm was measured by using a spectrophotometer UV-3100S (manufactured by Shimadzu Corp.).

## (5) Light absorptivity

The light transmittance $T_{800}$ (%) at a wavelength of 800 nm was measured by using a self-recording spectrophotometer, Model 340 (manufactured by Hitachi, Ltd.) and the light absorptivity was determined from the following expression:

$$\text{Light absorptivity (\%)} = [1 - \frac{T_{800}(\%)}{100}] \times 100$$

## (6) Surface hardness

According to JIS K5400 (1990), the pencils of various hardnesses were pressed against the cured layer at an angle of 45° and slided under a load of 1 kg. The hardness of the pencil which caused a scratch on the layer was regarded as the hardness of the layer.

## Example 1

100 parts of dimethyl terephthalate, 70 parts of ethylene glycol and 0.07 parts of calcium acetate monohydrate were supplied into a reactor and heated therein to evaporate away methanol and to carry out an ester exchange reaction. The temperature was raised to 230°C in about 4.5 hours after starting the reaction, whereby the ester exchange reaction was substantially completed.

Then, 0.04 parts of phosphoric acid and 0.035 parts of antimony trioxide were added, and the resultant mixture was polymerized in the usual way. That is, the reaction temperature was raised gradually till finally reaching 280°C, while the pressure was reduced gradually till finally reaching 0.5 mmHg. The reaction was completed in 4 hours, and the reaction product was chipped in the usual way to obtain polyester with an intrinsic viscosity ($\eta$) of 0.65. This polyester and the carbon black particles with a primary particle size of 15 nm were kneaded together by a twin-screw kneader, and the kneaded mass was passed through a 1,000-mesh filter and then chipped to obtain a master batch with a carbon black content of 10 wt% and $\eta$ = 0.60. This is called polyester A.

Meanwhile, 100 parts of dimethyl terephthalate, 60 parts of ethylene glycol and 0.09 parts of magnesium acetate tetrahydrate were supplied into a reactor and heated to evaporate away methanol and to carry out an ester exchange reaction. The reaction was substantially completed in 4 hours after starting the reaction. Then titanium oxide with an average particle size of 0.25 $\mu$m, which had been dispersed in ethylene glycol, classified and subjected to filtration treatment, was added thereto in an amount of 0.3 wt%, followed by further addition of 0.04 parts of ethyl acid phosphate and 0.035 parts of antimony trioxide, and was polycondensated for 4 hours to obtain a polyester with $\eta$ = 0.66. This polyester is called polyester B.

Further, 100 parts of dimethyl terephthalate, 70 parts of ethylene glycol, 0.10 part of calcium acetate monohydrate and 0.17 parts of lithium acetate dihydrate were supplied into a reactor and heated to evaporate away methanol and to conduct an ester exchange reaction. The temperature was raised to 230°C in about 4 hours after starting the reaction, whereby the reaction was substantially completed.

0.35 parts of triethyl phosphate was added to the reaction product, followed by further addition of 0.05 parts of antimony trioxide as polycondensation catalyst, and the resultant mixture was polymerized in the usual way to obtain a polyester. In this polyester were present a great many uniform and fine precipitated particles of about 0.5 to 1 $\mu$m in size, containing calcium, lithium and phosphorus. This polyester, which is called polyester C, had an intrinsic viscosity ($\eta$) of 0.65.

The above polyesters A, B and C were blended in the ratios of 1.6 parts, 80 parts and 20 parts, respectively, and the resultant mixture was dried in the usual way, extruded at a temperature of 285°C and then cooled rapidly to form an amorphous polyester sheet of 1080 μm in thickness. This amorphous polyester sheet was stretched 3.6 times in the machine direction at a temperature of 85°C , and then a coating solution of the following composition was applied on both sides of the stretched polyester film. This coated sheet was further stretched 4.0 times at a temperature of 110°C in the transverse direction by a tenter and heat-set at a temperature of 230°C to obtain a film with a coating thickness of 0.06 μm and a polyester base film of thickness of 75 μm.

Coating solution composition

75 parts of an aqueous dispersion (A) of polyurethane, Hydran AP-40 (produced by Dai-Nippon Ink Chemical Industries Co., Ltd.), 20 parts of an aqueous dispersion (B) of polyester, Finetex ES-670 (produced by Dai-Nippon Ink Chemical Industries Co., Ltd.), and 5 parts of silica sol with an average particle size of 0.07 μm.

A composition of 35 parts of dipentaerythritol hexaacrylate, 35 parts of tetrafunctional urethane acrylate, 25 parts of bisphenol A-type epoxy acrylate and 5 parts of 1-hydroxycyclohexyl phenyl ketone, was applied on one side of the above film so that the coating thickness after curing became 3 μm and then the resultant composition was exposed, for about 15 seconds at an irradiation distance of 150 mm from the film surface, using a high pressure mercury lamp with an energy of 120 W/cm, to form an active energy ray-curing layer.

The center line average roughness ($Ra^A$) of the surface (A surface) of the active energy ray-curing layer of the obtained multilayered polyester film was 0.002 μm, and the center line average roughness ($Ra^B$) of the opposite surface (B surface) was 0.01 μm. The surface hardness of the active energy ray-curing layer was 3H.

On this active energy ray-curing layer, a recording layer (540 Å in thickness) composed of In layer (300 Å in thickness) and GeS layer (240 Å in thickness) was formed by sputtering to obtain an optical tape.

The workability in the optical tape production process was excellent, and the active energy ray-curing layer was free of surface defects such as scratches.

The optical recording characteristics of the obtained optical tape were measured by the following conditions. The C/N ratio was not less than 55 dB.

| Linear velocity | 2.0 m/s |
|---|---|
| Recording power | 10 mW |
| Reproducing power | 1 mW |
| Recording frequency | 3.5 MHz |

This optical tape showed excellent optical recording characteristics in recording and reproducing operations. The laser light applied to the recording layer was absorbed by the polyester film, and there was detected almost no reflection of the light applied to the recording pits. The detected signal was controlled in noise component. Excellent reproducing performance of this optical tape was especially notable.

Example 2

A multilayered polyester film was formed by following the same procedure as Example 1 except that the mixing ratios of the polyesters A, B and C were changed to 2.6 parts, 60 parts and 40 parts, respectively.

Example 3

A multilayered polyester film was formed according to the same procedure as Example 1 except for changing the composition of the active energy ray-curing layer as shown below, coating this composition on a polyester sheet so that the coating thickness after curing became 3 μm, and irradiating the electron beams with an acceleration voltage of 18 kV and a beam current of 36 mA at a dose of 10 mrad to form an active energy-ray curing layer.

Composition of active energy ray-curing layer

50 parts of dipentaerythritol hexaacrylate and
50 parts of tetrafunctional urethane acrylate.

Comparative Example 1

A multilayered polyester film was formed by following the same procedure as Example 1 except that no active energy ray-curing layer was provided. By using this film, an optical tape was made in the same way as Example 1. This optical tape was high in surface roughness on the surface of the recording layer side and poor in optical recording characteristics.

Comparative Example 2

A multilayered polyester film was obtained according to the same procedure as Example 1 except that a polyester resin layer of 3 μm in thickness was provided in place of the active energy ray-curing layer. The optical tape made by using this obtained film had many scratches on the polyester resin layer and was poor in optical recording characteristics.

Comparative Example 3

A multilayered polyester film was formed by following the same procedure as Example 1 except that the mixing ratios of the polyesters A, B and C were changed to 0 part, 80 parts and 20 parts, respectively. By using this film, an optical tape was made in the same way as Example 1. In this obtained optical tape, the light irradiated to the recording pits was partly reflected at the front and rear sides of the polyester film and detected as reflected light, so that this tape was poor in reproducing performance.

The results obtained in the above Examples and Comparative Examples are shown in Table 1.

Example 4

87 parts of terephthalic acid and 42 parts of ethylene glycol were reacted at a temperature of 260°C under normal pressure in 100 parts of a bis (β-hydroxyethyl) terephthalate oligomer to obtain a polyester oligomer with an esterification rate of 97%.

Then an ethylene glycol slurry of spherical silica with an average particle size of 0.27 μm was added in an amount of 2 wt% based on the polyester, followed by further addition of 0.014 parts of ethyl acid phosphate, 0.022 parts of antimony trioxide and 0.086 parts of magnesium acetate, and a polycondensation reaction was conducted to obtain a polyester with an intrinsic viscosity ($\eta$)of 0.65.

This polyester was dried, then extruded from the die of an extruder at a temperature of 290°C and cast onto a cooling drum by using the electrostatic pinning method to obtain an amorphous polyester sheet having a thickness of 920 μm.

This sheet was stretched 3.5 times in the machine direction at a temperature of 95°C. Then a coating solution of the following composition was coated on both sides of the polyester sheet, and the coated sheet was stretched 3.5 times in the transverse direction at a temperature of 110°C, heat-treated at a temperature of 230°C and then subjected to a longitudinal relaxing-treatment to obtain a biaxially stretched polyester film with a coating thickness of 0.06 μm and a polyester base film of 75 μm in thickness.

Composition of coating solution

75 parts of an aqueous dispersion (A) of polyurethane, Hidran AP-40 (produced by Dai-Nippon Ink Chemical Industries Co., Ltd.), 20 parts of an aqueous dispersion (B) of polyester, Finetex ES-670 (produced by Dai-Nippon Ink Chemical Industries Co., Ltd.) and 5 parts of silica sol with an average particle size of 0.07 μm.

On one side of the said film, the following composition was coated so that the coating thickness after curing became 4 μm and exposed for about 15 seconds at an irradiation distance of 150 mm from the film surface, using a high pressure mercury lamp with an energy of 120 w/cm, to form an active energy ray-curing layer containing a light absorptive material.

10

Composition of active energy ray-curing layer

35 parts of dipentaerythritol hexaacrylate, 35 parts of tetrafunctional urethane acrylate, 25 parts of bisphenol A type epoxy acrylate, 5 parts of 1-hydroxycyclohexyl phenyl ketone, and 2 parts of a light absorptive material, IR-820B (produced by Nippon Kayaku K.K., which is a polymethine compound).

The center line average roughness ($Ra^A$) of the surface (A surface) of the active energy ray-curing layer of the obtained multilayered polyester film was 0.002 $\mu$m, and the center line average roughness ($Ra^B$) of the opposite surface (B surface) was 0.01 $\mu$m. The surface hardness of the active energy ray-curing layer was 3H, and the light transmittance ($T_{830}$) of the multilayered polyester film was 18%.

On the active energy ray-curing layer of the said film, a recording layer (540 Å in thickness) composed of In layer (300 Å in thickness) and GeS layer (240 Å in thickness) was formed by sputtering to obtain a optical tape.

The workability in the optical tape producing process was excellent, and the active energy ray-curing layer was free of surface defects such as scratches.

The optical recording characteristics of the obtained optical tape were measured by the following conditions. The C/N ratio was not less than 55 dB.

| | |
|---|---|
| Linear velocity | 2.0 m/s |
| Recording power | 10 mW |
| Reproducing power | 1 mW |
| Recording frequency | 3.5 MHz |

This optical tape showed excellent optical recording characteristics in recording and reproduction. The laser light irradiated to the recording layer was absorbed by the laminated polyester film, and there was detected almost no reflection of the light irradiated to the recording pits. The detected signal was controlled in noise component. This optical tape was especially excellent in reproducing performance.

Example 5

A multilayered polyester film was obtained according to the same procedure as Example 4 except that the composition of the active energy ray curing-layer was changed as shown below, and that the composition was coated on a polyester sheet so that the coating thickness after curing became 3 $\mu$m. The center line average roughness ($Ra^A$) of the surface (A surface) of the active energy ray-curing layer of the obtained multilayered polyester film was 0.002 $\mu$m, and the center line average roughness ($Ra^B$) of the opposite surface (B surface) was 0.01 $\mu$m. Surface hardness of the active energy ray-curing layer was 2H, and light transmittance ($T_{830}$) of the multilayered polyester film was 10%. The electron beams with an accelerating voltage of 18 kV and a beam current of 36 mA was applied at a dose of 10 mrad to form an energy ray-curing layer to obtain a multilayered polyester film.

Composition of active energy ray curing layer

50 parts of dipentaerythritol acrylate, 45 parts of tetrafunctional urethane acrylate, 5 parts of 2-methyl[4-(methylthio)phenyl]-2-morpholino-1-propanone, and 4 parts of a light absorptive material, IR-820B (produced by Nippon Kayaku K.K., which is a polymethine compound).

Example 6

A multilayered polyester film was obtained according to the same process as Example 4 except for changing the composition of the active energy ray curing-layer as shown below, coating the composition to a thickness after curing of 3 $\mu$m, and applying the electron rays with an acceleration voltage of 180 kV and a beam current of 36 mA at a dose of 10 Mrad to form an active energy ray-curing layer.

Composition of active energy ray curing layer

50 parts of dipentaerythritol hexaacrylate, 50 parts of tetrafunctional urethane acrylate, and 3 parts of a light absorptive material, IR-820B (produced by Nippon Kayaku K.K., which is a polymethine compound).

### Comparative Example 4

A multilayered polyester film was obtained by following the same procedure as Example 4 except that no active energy ray curing-layer was provided. The optical tape made by using this film was high in surface roughness on its recording layer side and poor in optical recording performance.

### Comparative Example 5

A multilayered polyester film was obtained according to the same procedure as Example 4 except that the composition of the active energy ray-curing layer was changed as shown below, and that the composition was coated to a thickness of 4 $\mu$m after curing.

In the optical tape made by using this film, the light irradiated to the recording pits was partly reflected at the front and rear sides of the polyester film, and thus the reproducing performance of this tape was bad.

### Composition of active energy ray curing layer

35 parts of dipentaerythritol hexaacrylate, 35 parts of tetrafunctional urethane acrylate, 25 parts of bisphenol A-type epoxy acrylate, and 5 parts of 1-hydroxycyclohexyl phenyl keton

### Comparative Example 6

A multilayered polyester film was obtained in the same way as Example 4 except that a 4 $\mu$m thick layer of the following polyester resin was provided in place of the active energy ray-curing layer.

The optical tape made by using this film had many scratches on the polyester resin layer and was poor in optical recording performance.

### Polyester resin composition

100 parts of a polyester resin Vylon-200 (produced by Toyo Boseki Co., Ltd.) and 2 parts of a light absorptive material, (produced by Nippon Kayaku K.K., which is a polymethine compound).

The results obtained in the above Examples and Comparative Examples are shown in Table 2.

### Example 7

87 parts of terephthalic acid and 42 parts of ethylene glycol were reacted at a temperature of 260°C under normal pressure in the presence of 100 parts of a bis ($\beta$-hydroxyethyl) terephthalate oligomer to obtain a polyester oligomer with an esterification rate of 97%.

Then an ethylene glycol slurry of spherical silica with an average particle size of 0.27 $\mu$m was added in an amount of 2 wt% based on the polyester, followed by further addition of 0.014 parts of ethyl acid phosphate, 0.022 parts of antimony trioxide and 0.086 parts of magnesium acetate, and a polycondensation reaction was conducted to obtain a polyester with an intrinsic viscosity ($\eta$)of 0.65.

This polyester was dried, then extruded from the die of an extruder at a temperature of 290°C and cast onto a cooling drum by using the electrostatic pinning method to obtain an amorphous polyester sheet having a thickness of 920 $\mu$m.

This sheet was stretched 3.5 times in the machine direction at a temperature of 95°C. Then a coating solution of the following composition was coated on both sides of the polyester sheet, and the coated sheet was stretched 3.5 times in the transverse direction at a temperature of 110°C, heat treated at a temperature of 230°C and then subjected to a longitudinal relaxing treatment to obtain a biaxially stretched polyester film with a coating thickness of 0.06 $\mu$m and a base polyester film thickness of 75 $\mu$m.

### Composition of coating solution

75 parts of an aqueous dispersion (A) of polyurethane, Hidran AP-40 (produced by Dai-Nippon Ink Chemical Industries Co., Ltd.), 20 parts of an aqueous dispersion (B) of polyester, Finetex ES-670 (produced by Dai-Nippon Ink Chemical Industries Co., Ltd.) and 5 parts of silica sol with an average particle size of 0.07 $\mu$m.

On one side of the said film, the following composition was coated to form the light absorption layer of 4 $\mu$m in thickness.

Composition of light absorptive material

100 parts of a polyester resin Vylon-200 (produced by Toyo Boseki Co., Ltd.) and 2 parts of a light absorptive material, (produced by Nippon Kayaku K.K., which is a polymethine compound).

On the surface of the formed light absorption layer, the following composition was coated so that the coating thickness after curing became 4 μm, and exposed for about 15 seconds at an irradiation distance of 150 mm from the film surface, using a high pressure mercury lamp with an energy of 120 w/cm, to obtain a multilayered polyester film.

Composition of active energy ray-curing layer

35 parts of dipentaerythritol hexaacrylate, 35 parts of tetrafunctional urethane acrylate, 25 parts of bisphenol A type epoxy acrylate, and 5 parts of 1-hydroxycyclohexyl phenyl ketone

The workability in the optical tape producing process was excellent, and the active energy ray-curing layer was free of surface defects such as scratches.

The optical recording characteristics of the obtained optical tape were measured by the following conditions. The C/N ratio was not less than 55 dB.

| Linear velocity | 2.0 m/s |
|---|---|
| Recording power | 10 mW |
| Reproducing power | 1 mW |
| Recording frequency | 3.5 MHz |

This optical tape showed excellent optical recording characteristics in recording and reproduction. The laser light irradiated to the recording layer was absorbed by the laminated polyester film, and there was detected almost no reflection of the light applied to the recording pits. The detected signal was controlled in noise component. This optical tape was especially excellent in reproducing performance.

Example 8

A multilayered polyester film was obtained according to the same process as Example 7 except for changing the composition of the light absorptive material as shown below

Composition of light absorptive material

100 parts of a polyester resin Vylon-200 (produced by Toyo Boseki Co., Ltd.) and 5 parts of a light absorptive material (carbon black particles with a primary particle size of 15 nm).

Example 9

A multilayered polyester film was obtained by following the same procedure as Example 7 except that the composition of the light absorptive material was changed as shown below and active energy ray curing-layer was provided on the opposite surface of the polyester film from the light absorption layer.

Composition of light absorptive material

100 parts of a polyester resin Vylon-200 (produced by Toyo Boseki Co., Ltd.), 2 parts of a light absorptive material, (produced by Nippon Kayaku K.K., which is a polymethine compound) and 1 part of silica particles, Syloid 244 (produced by Fuji Devison Chemical Co., Ltd.).

Example 10

A multilayered polyester film was obtained according to the same process as Example 9 except for changing the composition of the light absorptive material as shown below

13

Composition of light absorptive material

100 parts of a polyester resin Vylon-200 (produced by Toyo Boseki Co., Ltd.), 5 parts of a light absorptive material (carbon black particles with a primary particle size of 15 nm) and 1 part of silica particles, Syloid 244 (produced by Fuji Devison Chemical Co., Ltd.).

Table 1

| | | Ra (μm) A side | Ra (μm) B side | Light absorptivity of polyester film | Surface hardness | $F_5$ (kg/mm$^2$) | Heat shrinkage (%) | Optical recording performance | Light transmittance ($T_{830}$) (%) |
|---|---|---|---|---|---|---|---|---|---|
| Examples | 1 | 0.002 | 0.01 | 74 | 3H | 13 | 1.4 | Excellent | 27 |
| | 2 | 0.003 | 0.02 | 88 | 3H | 12 | 1.4 | Excellent | 13 |
| | 3 | 0.002 | 0.01 | 74 | 3H | 13 | 1.4 | Excellent | 27 |
| Comp. Examples | 1 | 0.01 | 0.01 | 75 | F | 13 | 1.4 | Poor | 26 |
| | 2 | 0.003 | 0.01 | 74 | HB | 13 | 1.4 | Poor | 27 |
| | 3 | 0.002 | 0.01 | 23 | 3H | 12 | 1.4 | Poor | 78 |

14

EP 0 585 710 A2

Table 2

| | Ra$^A$ ($\mu$m) | Ra$^B$ ($\mu$m) | $^T$830 (%) | Surface hardness | F$_5$ (kg/mm$^2$) | Shrinkage (%) | Optical recording performance |
|---|---|---|---|---|---|---|---|
| Example 4 | 0.002 | 0.01 | 20 | 3H | 13 | 1.4 | Excellent |
| Example 5 | 0.003 | 0.01 | 15 | 2H | 13 | 1.4 | Excellent |
| Example 6 | 0.002 | 0.01 | 16 | 3H | 13 | 1.4 | Excellent |
| Comp. Example 4 | 0.01 | 0.01 | 86 | F | 13 | 1.4 | Poor |
| Comp. Example 5 | 0.002 | 0.01 | 86 | 3H | 13 | 1.4 | Poor |
| Comp. Example 6 | 0.002 | 0.01 | 18 | HB | 13 | 1.4 | Poor |

Table 3

| Example | Ra$^A$ ($\mu$m) | Ra$^B$ ($\mu$m) | $^T$830 (%) | Surface hardness | F$_5$ (kg/mm$^2$) | Shrink age (%) | Optical recording performance |
|---|---|---|---|---|---|---|---|
| 7 | 0.002 | 0.01 | 19 | 3H | 13 | 1.4 | Excellent |
| 8 | 0.002 | 0.01 | 13 | 3H | 13 | 1.4 | Excellent |
| 9 | 0.002 | 0.04 | 18 | 3H | 13 | 1.4 | Excellent |
| 10 | 0.002 | 0.04 | 14 | 3H | 13 | 1.4 | Excellent |

## Claims

1. A multilayered polyester base film for optical tapes, comprising a polyester film and an active energy ray-curing layer formed on one side of said polyester film, a surface hardness of the active energy ray-curing layer being not less than H, a center line average roughness (Ra$^A$) of the surface (A surface) of the active energy ray-curing layer being not more than 0.005 $\mu$m, a center line average roughness (Ra$^B$) of the exposed surface (B surface) opposite of the polyester film from the active energy ray-curing layer being 0.005 to 0.3 $\mu$m, and a light transmittance of said multilayered base film being 30%.

2. A multilayered polyester base film for optical tapes according to Claim 1, which said multilayered polyester base film is composed of a polyester film containing a light absorptive material and an active energy ray-curing layer formed on one side of said polyester film.

3. A multilayered polyester base film for optical tapes according to Claim 1, which said multilayered polyester base film is composed of a polyester film and an active energy ray-curing layer containing a light absorptive material formed on one side of said polyester film.

4. A multilayered polyester base film for optical tapes according to Claim 1, which said multilayered base film is composed of a polyester film, an active energy ray-curing layer, and a light absorption layer sandwiched between said polyester film and said active energy ray-curing layer.

5. A multilayered polyester base film for optical tapes according to Claim 1, which said multilayered base film is composed of a light absorption layer, an active energy ray-curing layer, and a polyester film sandwiched between the light absorption layer and the active energy ray-curing layer.

6. A multilayered polyester base film for optical tapes according to any of Claims 2-5, wherein the light absorptive material is at least one member selected from the group consisting of carbon black, anthraquinone compounds, aminium compounds, polymethine compounds, diimonium compounds, cyanin compounds, squarilium compounds, naphthoquinone compounds, quinoneimine compounds, quinonediimine compounds, pyrylium compounds, triphenylmethane compounds, croconic methine compounds, tetrahydrocholine compounds, azulenium compounds, phthalocyanine compounds and dithiol metal complex salt compounds.

15

EP 0 585 710 A2

7. A multilayered polyester base film for optical tapes according to Claim 2, wherein the light absorptive material is carbon black.

8. A multilayered polyester base film for optical tapes according to Claim 7, wherein the content of carbon black is 0.05 to 5.0 wt%.

9. A multilayered polyester base film for optical tapes according to any of Claims 2-5, wherein the light absorptive material is at least one member selected from the group consisting of anthraquinone compounds, aminium compounds, polymethine compounds, diimonium compounds, cyanin compounds, squarilium compounds, naphthoquinone compounds, quinoneimine compounds, quinonediimine compounds, pyrylium compounds, triphenylmethane compounds, croconic methine compounds, tetrahydrocholine compounds, azulenium compounds, phthalocyanine compounds and dithiol metal complex salt compounds.

10. A multilayered polyester base film for optical tapes according to Claim 9, wherein the content of the light absorptive material is 0.01 to 30 wt%.

11. A multilayered polyester base film for optical tapes according to Claim 1, wherein the active energy ray-curing layer is composed of an unsaturated polyester based composition, an acrylic resin based composition, an addition polymerization based composition, a thiol/acrylic hybrid based composition, a cationic polymerization based composition, or a cationic polymerization and radical polymerization hybrid based composition.

12. A multilayered polyester base film for optical tapes according to Claim 11, wherein the active energy ray-curing layer is composed of an acrylic resin based composition composed of an acrylic oligomer and a reactive diluent.

13. A multilayered polyester base film for optical tapes according to Claim 1, wherein the thickness of the active energy ray-curing layer is 0.1 to 20 μm.

14. A multilayered polyester base film for optical tapes according to Claim 1, wherein the thickness of the polyester film is 5 to 300 μm.

15. A multilayered polyester base film for optical tapes according to Claim 4 or 5, wherein the thickness of the light absorption layer is 0.1 to 20 μm.

16